# EUROPEAN PATENT SPECIFICATION

(11) **EP 3 336 343 B1**
(45) Date of publication and mention of the grant of the patent: **12.02.2020**
(21) Application number: 17206427.1
(22) Date of filing: 11.12.2017
(51) Int. Cl.: F02M 61/18, F02M 61/14, F02M 21/02, F02F 1/24

(54) **A NOZZLE FOR FUEL VALVE FOR INJECTING FUEL INTO THE CYLINDERS OF A LARGE TURBOCHARGED TWO-STROKE COMPRESSION-IGNITED INTERNAL COMBUSTION ENGINE AND AN ENGINE THEREFORE**
DÜSE FÜR KRAFTSTOFFVENTIL ZUR EINSPRITZUNG VON KRAFTSTOFF IN DIE ZYLINDER EINES GROSSEN TURBOGELADENEN ZWEITAKTVERBRENNUNGSMOTORS MIT KOMPRESSIONSZÜNDUNG UND MOTOR DAFÜR
BUSE POUR SOUPAPE DE CARBURANT POUR INJECTER DU CARBURANT DANS LES CYLINDRES D'UN GRAND MOTEUR À COMBUSTION INTERNE À ALLUMAGE PAR COMPRESSION TURBOCOMPRESSÉ À DEUX TEMPS ET MOTEUR ASSOCIÉ

(30) Priority: 13.12.2016 DK 201670987
(43) Date of publication of application: 20.06.2018
(73) Proprietor: MAN Energy Solutions, filial af MAN Energy Solutions SE, Tyskland, 2450 Copenhagen SV (DK)
(72) Inventor: Hagen, Peter, 2791 Dragoer (DK)
(74) Representative: Nordic Patent Service A/S

(56) References cited:
- EP-A1- 2 657 479
- DE-A1-102005 046 433
- US-A1- 2013 263 813
- US-A1- 2016 230 730

## Description

### TECHNICAL FIELD

The present disclosure relates to a nozzle for a fuel valve for injecting fuel into the cylinders of a large turbocharged two-stroke self-igniting internal combustion engine with crossheads, in particular to a nozzle for injecting gaseous or low flashpoint fuel into the cylinders of a large turbocharged two-stroke self-igniting internal combustion engine with crossheads.

### BACKGROUND

Large turbocharged two-stroke self-igniting crosshead internal combustion engine which are typically used as prime movers in large ocean going ships, such as container ships or in power plants.

The cylinders of these engines are provided with a single exhaust valve centrally placed in the cylinder cover i.e. at the top of the cylinder and with a ring of piston controlled scavenge ports at the lower region of the cylinder liner. The scavenge ports are slanted in order to create a swirl in the gases in the combustion chamber.

Two or three fuel valves are disposed in the cylinder cover around the centrally placed exhaust valve, with their nozzles projecting into the combustion chamber. The fuel valves are peripherally disposed in the cylinder cover with the nozzle holes of the nozzles directed with the swirl, away from the cylinder wall and into the combustion chamber. Occasionally, a single nozzle hole of a nozzle is directed against the swirl in the combustion chamber.

A nozzle is attached to the forward or distal end of a fuel valve. The fuel valve comprises an elongated housing with the proximal or rear end protruding from the upper surface of the cylinder cover and with the elongated fuel valve housing extending through the cylinder cover and with the nozzle at the forward or distal end of the elongated fuel valve housing projecting into the combustion chamber.

Known nozzles for large two-stroke diesel engines of the crosshead type typically have an elongated nozzle body comprising a cylindrical section with center main bore leading from the base of the nozzle at a distal end of the nozzle body to descending nozzle bores that are located at or near the tip or distal end of the nozzle bodies. The tip or distal end can be round or flat but is closed since the nozzle bores must not be directed downwardly towards the piston. Thus, the nozzle bores are laterally directed relative to the main axis of the nozzle and typically approximately to the main axis of the engine cylinder. Typically, each nozzle is provided with three to seven nozzle bores that are all connected to the main bore.

Since the nozzle body projects into the combustion chamber it is exposed to the hot gases of the combustion chamber and parts of the nozzle body will therefore reach relatively high temperatures of up to approximately 400°C. The incoming fuel is for conventional heavy fuel oil operated engines approximately 140°C. Thus, the incoming fuel in the main bore leaving the nozzle through the nozzle bores has a significantly lower temperature than the gas surrounding the outer surface of the nozzle body. Thus, the material of the nozzle body is exposed to a substantial temperature gradient, causing stresses in the material.

In recent years there has been a trend to operate large two-stroke diesel engine of the crosshead type with gaseous fuel. These fuels entered the main bore at a temperature that is substantially lower, typically approximately 50 to 80 degrees Celsius. Thus, these gaseous fuels expose the material of the nozzle body to a significantly larger temperature gradient since the temperature of the gas in the combustion chamber is substantially unchanged.

There is also been a trend in recent years to operate large two-stroke diesel engines of the crosshead type with low flashpoint fuels. These low flashpoint fuels also enter the main bore in the nozzle a temperature of approximately 50 to 80 degrees Celsius and thus these low flashpoint fuels also exposed the material of the nozzle to a larger temperature gradient when compared to heavy fuel oil.

The known of nozzles develops cracks between the nozzle holes due to thermal fatigue of the material when they are exposed to by high operating temperature gas in the combustion chamber and the high cooling effect of the injected fuel/gas.

The increased temperature gradient that the material of the nozzle body is exposed to for engines that are operated with gaseous fuels or low flashpoint fuels leads to an increased risk of crack formation in the nozzle body material, especially in the area of the nozzle where the nozzle holes are located.

EP3002444 discloses a fuel valve for injecting gaseous fuel and pilot oil into the combustion chamber of a large two-stroke self-igniting internal combustion engine. The fuel valve comprises an elongated fuel valve housing with rear and front end, a hollow nozzle with nozzle holes and a closed tip, a gaseous fuel inlet port for connection to a source of pressurized gaseous fuel and an axially displaceable valve needle having a closed position and an open position and resting on a seat in the closed position and thus preventing flow from the gaseous fuel inlet port to the nozzle. In the open position the axially displaceable needle has lift from the seat thereby allowing flow from the gaseous fuel inlet port to the nozzle. The fuel valve further comprises an actuator system for controllably moving the axially displaceable valve needle between the closed position and the open position, a pilot oil port for connection to a source of pilot oil, a pilot oil injection conduit extending axially inside the axially displaceable needle and a pump chamber with an inlet fluidly connected to the pilot oil port and an outlet connected to a first end of the pilot oil supply conduit. The pump chamber contracts when the axially displaceable needle is moved from the closed position to the open position and the pump chamber expands when the axially displaceable needle is moved from the open position to the closed position. A second end of the pilot oil injection conduit is fluidly connected to the nozzle so that pilot oil is delivered to the nozzle when the pump chamber contracts.

DE102005046433 discloses a fuel valve for blowing a gaseous fuel in to a manifold of an internal combustion engine. This fuel valve has a housing and an actuating unit for a valve member which works in combination with the valve seat. The downstream side of the valve has a gas diversion and/or distribution unit. The fuel valve is provided with a gas deflection and/or distribution means.

### SUMMARY

In view of the above it is an object of the present invention to provide a nozzle for a fuel valve for injecting gaseous fuel into a large two-stroke diesel engine of the crosshead type that overcomes or at least reduce the problems mentioned above.

The foregoing and other objects are achieved by the features of the independent claims. Further implementation forms are apparent from the dependent claims, the description and the figures.

According to a first aspect, there is provided a nozzle for a fuel valve for injection of gaseous fuel into a large two-stroke turbocharged compression ignited internal combustion engine with crossheads, the nozzle comprising a nozzle body extending in a main direction and axis from a base at a proximal end of the nozzle body to a distal end of the nozzle body, the base being configured for attachment to the fuel valve, the nozzle body comprising a substantially cylindrical portion extending between the base and the distal end, an inlet port opening to the base for receiving fuel from the fuel valve, a plurality of nozzle holes arranged in the nozzle body at or near the distal end, a main bore extending in the main direction from the inlet port into the nozzle body to the nozzle holes thereby fluidly connecting the nozzle holes to the inlet, wherein the distal end comprises a substantially planar end surface that is arranged squint to the main axis X.

By providing a substantially flat end surface at a squint angle to the main axis it is possible to provide a short nozzle in which the spacing between the individual nozzle holes can still be kept relatively large, thus avoiding that a length of the nozzle body substantially protrudes into the combustion chamber which would cause the nozzle to become very hot during operation of the engine and avoiding that the nozzle bores are closely spaced, thereby leaving only very little nozzle body material between the individual nozzle holes. Both aspects improve the capacity of the nozzle to withstand crack formation due to exposure to heat from the combustion chamber and relative coolness from the fuel supplied to the nozzle.

According to a first possible implementation of the first aspect the end surface is centered around the main axis.

According to a second possible implementation of the first aspect the end surface has a substantially circular or elliptical outline.

According to a third possible implementation of the first aspect the nozzle comprises a transition area with a rounded or curved outer surface between the substantially cylindrical portion and the end surface.

According to a fourth possible implementation of the first aspect the rounded or curved outer surface connects the outer surface of the cylindrical portion to the end surface.

According to a fifth possible implementation of the first aspect the nozzle holes are disposed in the transition area distributed around the outline of the end surface.

According to a sixth possible implementation of the first aspect the nozzle bores open to the rounded or curved surface.

According to a seventh possible implementation of the first aspect the nozzle holes each have a nozzle axis, and wherein the nozzle axis of each of the nozzle holes is arranged at an obtuse angle α with the main direction.

According to an eighth possible implementation of the first aspect the radial components of each of the nozzle axis relative to the main axis are distributed over a circular sector with an arc less than 180 deg., preferably less than 120 deg. and even more preferable less than 110 deg.

According to a ninth possible implementation of the first aspect the radial components of each of the nozzle axis relative to the main axis are substantially evenly distributed over the circular section.

According to a second aspect there is provided a large two-stroke compression ignited engine comprising a cylinder with a combustion chamber in the cylinder between a reciprocating piston and a cylinder cover, a fuel valve with a nozzle according to any the 1st aspect or any implementation thereof connected to the fuel valve, the fuel valve being disposed in a cover bore in the cylinder cover, the cover bore opening to an inner surface of the cylinder cover facing the combustion chamber), wherein the end surface of the nozzle is arranged substantially parallel with the inner surface in the area where the cover bore opens to the inner surface.

According to a first possible implementation of the second aspect the distal end of the nozzle is substantially flush with the inner surface of the cylinder cover in the area where the cover bore opens to the inner surface.

According to a second possible implementation of the second aspect the distal end only marginally protrudes from the inner surface of the cylinder cover into the combustion chamber.

According to a third possible implementation of the second aspect the opening of the cover bore to the inner surface is undercut.

According to a fourth possible implementation of the second aspect the inner surface is provided with a cutout connected to the opening of the cover bore to the inner surface for providing space for jets from the nozzle holes.

These and other aspects of the invention will be apparent from and the embodiments described below.

### BRIEF DESCRIPTION OF THE DRAWINGS

In the following detailed portion of the present disclosure, the invention will be explained in more detail with reference to the example embodiments shown in the drawings, in which:
Fig. 1 is an elevated view showing the fore end and one lateral side of a large two-stroke compression-ignited turbocharged engine according to an example embodiment,
Fig. 2 is an elevated view showing the aft end and the other lateral side of the engine of Fig. 1,
Fig. 3 is a diagrammatic representation the engine according to Fig. 1 with its intake and exhaust systems,
Fig. 4 is an elevated view of a fuel valve for use in the engine of Figs. 1 to 3,
Fig. 5 is an elevated view of a nozzle for use with the fuel valve of Fig. 4,
Fig. 6 is a transparent side view of the nozzle of Fig. 5 5,
Fig. 7 is a collection of top views, cross-sectional views and longitudinal-sectional views of the nozzle of Fig. 5,
Fig. 8 is a sectional view showing the nozzle of Fig. 5 installed in a cylinder cover of the engine of Figs. 1 to 3,
Fig. 9 is a longitudinal-sectional view of the nozzle of Fig. 4, illustrating the angles between various components, and
Fig. 10 is a longitudinal-sectional view of a nozzle according to another embodiment.

### DETAILED DESCRIPTION

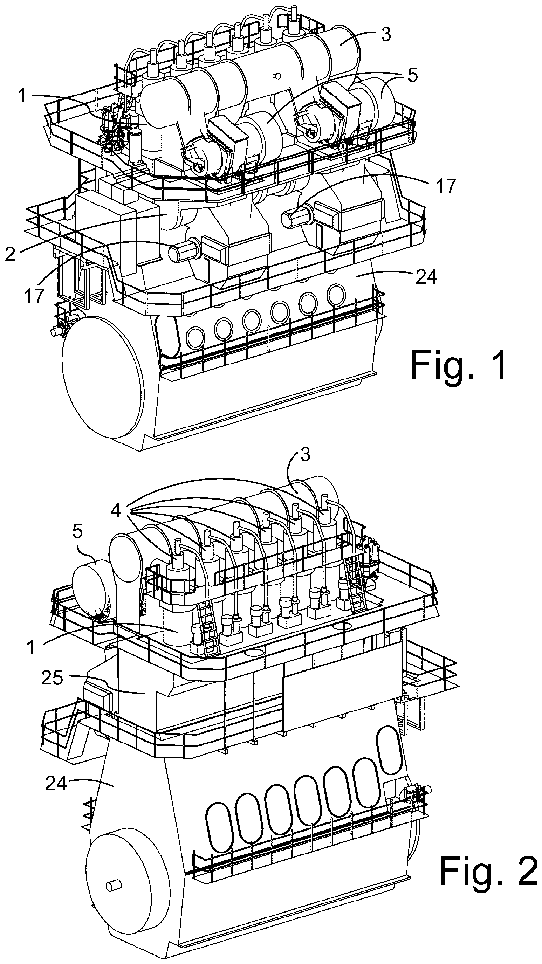

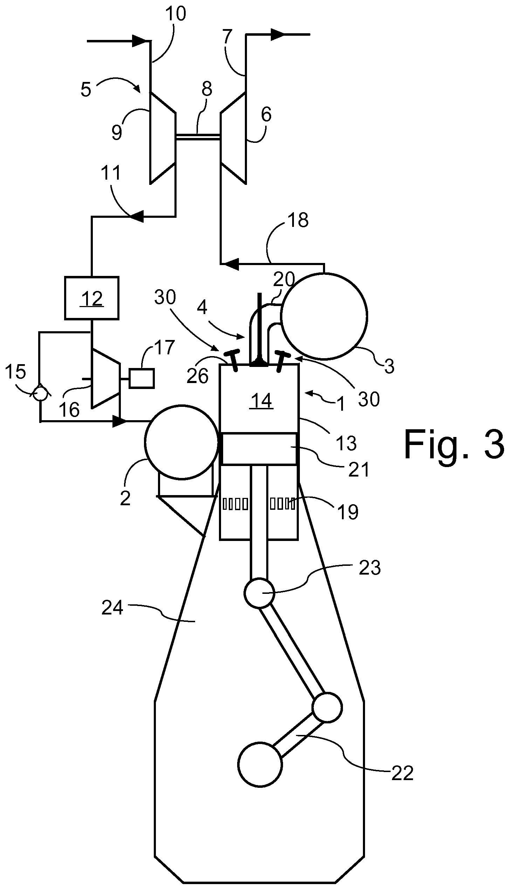

In the following detailed description, a nozzle for use with a fuel valve, and a large two stroke engine in which the nozzle and the fuel valve are used will be described by the example embodiments. Figs. 1 to 3 show a large low speed turbocharged two-stroke diesel engine with a crankshaft 22 and crossheads 23. Fig. 3 shows a diagrammatic representation of a large low speed turbocharged two-stroke diesel engine with its intake and exhaust systems. In this example embodiment, the engine has six cylinders 1 in line. Large turbocharged two-stroke diesel engines have typically between five and sixteen cylinders in line, carried by an engine frame 24. The engine may e.g. be used as the main engine in an ocean going vessel or as a stationary engine for operating a generator in a power station. The total output of the engine may, for example, range from 5,000 to 110,000 kW.

The engine is a diesel (compression-igniting) engine of the two-stroke uniflow type with scavenge ports 19 in the form of a ring of piston-controlled ports at the lower region of the cylinders 1 and an exhaust valve 4 at the top of the cylinders 1. Thus, the flow in the combustion chamber is always from the bottom to the top and thus the engine is of the so called uniflow type. The scavenging air is passed from the scavenging air receiver 2 to the scavenging air ports 19 of the individual cylinders 1. A reciprocating piston 21 in the cylinder 1 compresses the scavenging air, fuel is injected via two or three fuel valves 30 that are arranged in the cylinder cover 26. Combustion follows and exhaust gas is generated. When an exhaust valve 4 is opened, the exhaust gas flows through an exhaust duct 20 associated with the cylinder 1 concerned into an exhaust gas receiver 3 and onwards through a first exhaust conduit 18 to a turbine 6 of the turbocharger 5, from which the exhaust gas flows away through a second exhaust conduit 7. Through a shaft 8, the turbine 6 drives a compressor 9 supplied via an air inlet 10.

The compressor 9 delivers pressurized charging air to a charging air conduit 11 leading to the charging air receiver 2. The scavenging air in the conduit 11 passes through an intercooler 12 for cooling the charging air. The cooled charging air passes via an auxiliary blower 16 driven by an electric motor 17 that pressurizes the charging air flow in low or partial load conditions to the charging air receiver 2. At higher loads the turbocharger compressor 9 delivers sufficient compressed scavenging air and then the auxiliary blower 16 is bypassed via a non-return valve 15.

The cylinders are formed in a cylinder liner 52. The cylinder liners 52 are carried by a cylinder frame 25 that is supported by the engine frame 24.

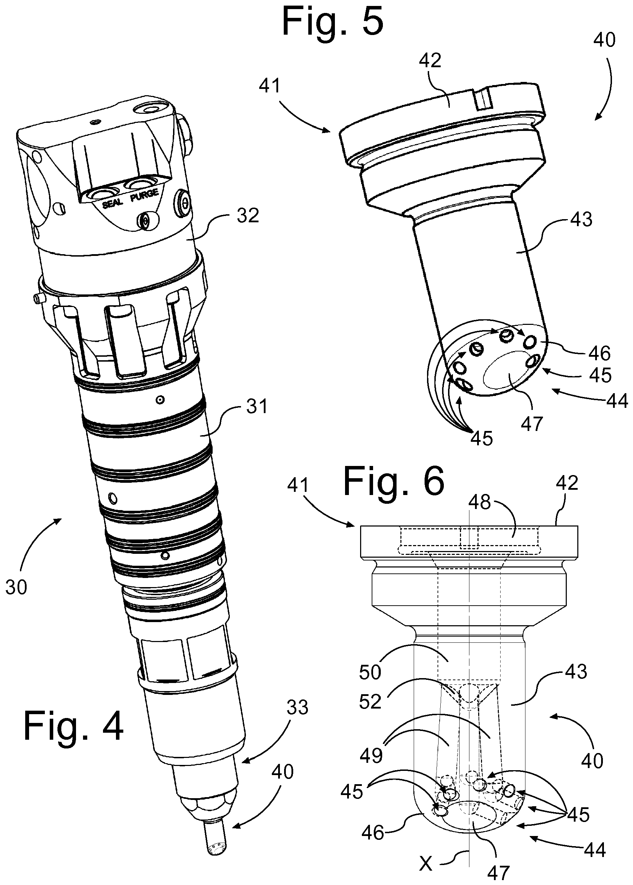

Fig. 4 shows one of the two or three fuel valves 30 that are mounted in a through-going bore in the cylinder cover 26 with the rear end 32 of the fuel valve 30 protruding from the upper side of the cylinder cover and with the distal end (tip) of the nozzle 40 marginally protruding into the combustion chamber or being flush with the combustion chamber. The fuel valve 30 comprises a elongated fuel valve body 31 with a nozzle holder 33 at its distal (forward) end. The nozzle holder connects the nozzle 42 the elongated fuel valve body 31. Fuel, such as gaseous fuel or liquid fuel is delivered in a controlled and time manner by the fuel valve 30 to the combustion chamber 14 via the nozzle 40.

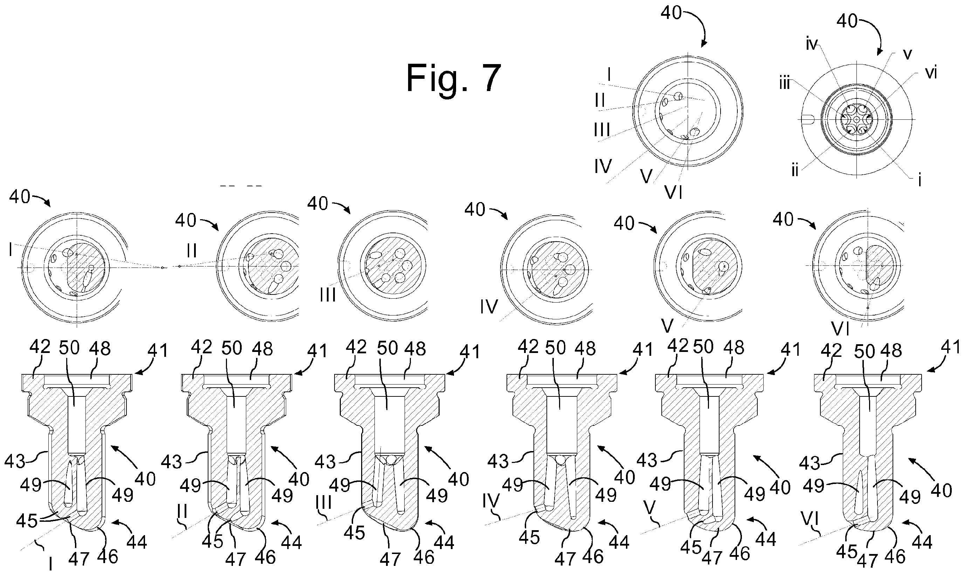

Figs. 5 to 9 illustrate an example embodiment of a nozzle 40. The nozzle 40 has a nozzle body that extends from a base 42 at a proximal end to a distal end 44 that forms the tip of the nozzle 40. A cylindrical portion 43 of the nozzle body extends from the base to the distal end 44.

The nozzle body is made from a suitable material, e.g. a suitable alloy as well known in the art.

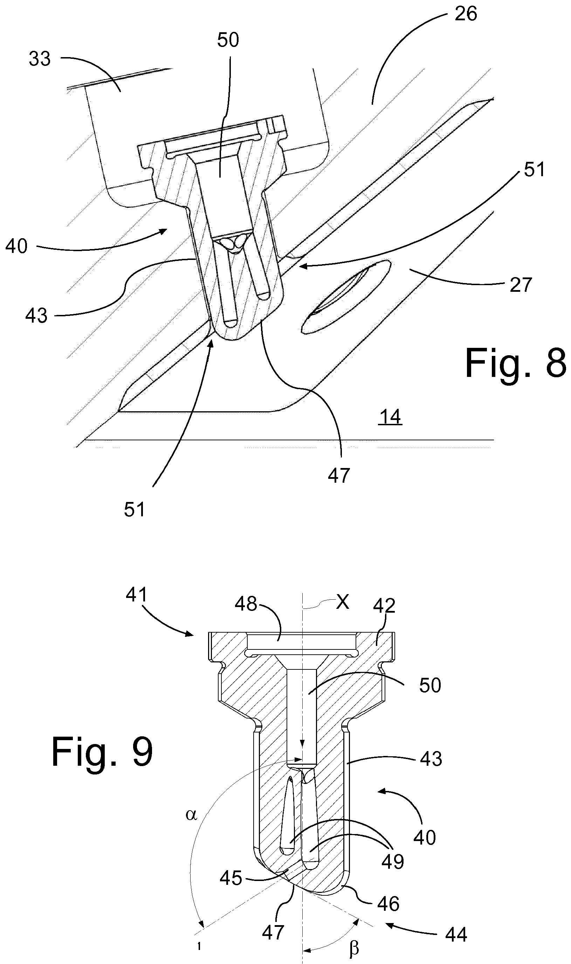

The distal end (tip) 44 comprises a substantially planar end surface 47 with a circular or elliptical outline. The end surface 47 connects to the cylindrical portion via a curved or rounded surface in an intermediate portion 46. The end surface 47 is arranged squint at an angle β to the main axis X. The end surface 47 is preferably centered around the main axis X. The squint angle β if selected such that it ensures that the end surface 47 is substantially parallel with the surface of the cylinder cover 26 facing the combustion chamber 14 in the area of the cylinder cover where the nozzle is disposed, as can be seen in Fig. 8.

The opening of the cover bore in which the fuel valve 26 and the nozzle 40 are disposed to the inner surface of the cylinder cover 26 is preferably rounded to provide a recessed area 51. In an embodiment, the recessed area 51 connects to a cutout in the inner surface of the cylinder cover 26 for providing space for jets from the nozzle bores 45.

The distal end 44, in particular the end surface 47 is preferably substantially flush with the inner surface 27 of the cylinder cover 26 in the area where the cover bore opens to the inner surface 27.

Alternatively, the distal end 47 of the nozzle 40 only marginally protrudes from the inner surface 27 of the cylinder cover 26 into the combustion chamber 14, as shown in Fig. 8.

The nozzle 40 is provided with a plurality of nozzle holes 45. The nozzle 40 is provided with any desirable number of nozzle holes 45, preferably between two and seven nozzle holes 45 even more preferably between three and six nozzle holes 45 and most preferably five or six nozzle holes 45. The nozzle 40 according to the present example embodiment is provided with six nozzle holes 45.

Preferably, the nozzle holes 45 opens to the curved or rounded surface in the intermediate portion 46, i.e. near or in the distal end 44. However, the nozzle holes 45 may also partially open to said end surface 47 or partially open to said cylindrical portion 43.

The nozzle holes 45 each have a nozzle axis I,II,III,IV,V,VI. The nozzle axis I,II,III,IV,V,VI of each of the holes 45 is arranged at an obtuse angle α with the main direction X. The obtuse angle α can be different for each of the nozzle holes 45. The radial components of each of the nozzle axis I,II,III,IV,V,VI relative to the main axis X are distributed over a circular sector with an arc less than 180 deg. preferably less than 120 deg. and even more preferable less than 110 deg. The radial components of each of the nozzle axis (I,II,III,IV,V,VI) relative to the main axis X are substantially evenly distributed over the circular section, in order to maximize the amount of nozzle body material between the individual nozzle holes 45.

The base 42 is provided with an inlet port 48 for receiving fuel from said fuel valve 30. A main bore 50 extends from said inlet port 48 into the nozzle body and into the cylindrical portion 43 in a direction along a main axis and direction X to a medial position in the nozzle body. At the medial position the main bore 50 connects to a plurality of supply individual passages 49 that are each connected to a nozzle bore 45.

The transition between the main bore 50 and the individual supply passages 49 can serve as a seat for a valve needle (is not shown) of the fuel valve 26.

The supply passages 49 are substantially evenly distributed in the cylindrical section 43 in order to have a substantially equal amount of nozzle body material between the individual supply passages 49.

The cross-sectional area of the main bore 50 is substantially larger than the total cross-sectional area of the supply passages 49. The total cross-sectional area of the supply passages 49 is substantially equal to the total cross-sectional area of the nozzle holes 45. The supply passages are substantially straight channels or substantially straight bores.

The inlet port 48 is in an embodiment formed by a bore with a diameter that is larger than the diameter of the main bore 50. Alternatively, the inlet port 48 can have the same diameter as the main bore.

The nozzle 40 provides a wider spread of nozzle holes 45, and thus more nozzle material between the nozzle holes 45 and thus better resistance against crack formation. Further, the nozzle 40 provides uniform inlet conditions to each of the nozzle holes, for creating substantially uniform fuel jets.

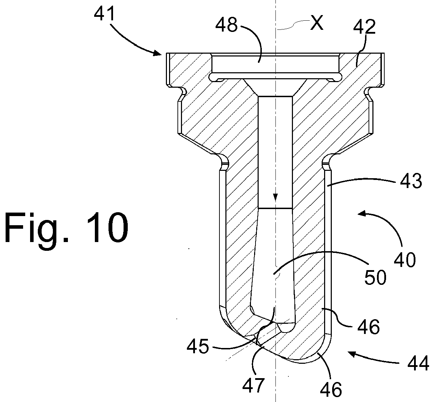

Fig. 10 illustrates another embodiment of the nozzle 40, that is essentially identical to the embodiment described above, except that the main bore 50 extends completely to the nozzle holes 45 and supplies the nozzle bores 45 directly with fuel, without any supply passages in between the main bore 50 and the nozzle holes 45.

The invention has been described in conjunction with various embodiments herein. However, other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope.

## Claims

1. A nozzle (40) for a fuel valve (30) for direct injection of gaseous fuel into a combustion chamber of a large two-stroke turbocharged compression ignited internal combustion engine with crossheads, said nozzle (40) comprising:
a nozzle body extending in a main direction and axis (X) from a base (42) at a proximal end (41) of said nozzle body to a distal end (44) of said nozzle body, said base (42) being configured for attachment to said fuel valve (30),
said nozzle body comprising a substantially cylindrical portion (43) extending in said main direction and axis (X) between said base (42) and said distal end (44),
an inlet port (48) opening to said base (42) for receiving fuel from said fuel valve (30),
a plurality of nozzle holes (45) arranged in said nozzle body at or near said distal end (44), **characterised in that**
a main bore (50) extending in said main direction and axis (X) from said inlet port (48) into said nozzle body to said nozzle holes (45) thereby fluidly connecting said nozzle holes (45) to said inlet (48) and
that said distal end (44) comprises a substantially planar end surface (47) that is arranged squint to said main direction and axis (X).

2. A nozzle (40) according to claim 1, wherein said end surface (47) is centered around said main direction and axis (X).

3. A nozzle (40) according to claim 1 or 2, wherein said end surface (47) has a substantially circular or elliptical outline.

4. A nozzle (40) according to any one of claims 1 to 3, comprising a transition area (46) with a rounded or curved outer surface between said substantially cylindrical portion (43) and said end surface (47).

5. A nozzle (40) according to claim 1, wherein said rounded or curved outer surface connects the outer surface of said cylindrical portion (43) to said end surface (47).

6. A nozzle (40) according to claim 4 or 5, wherein said nozzle holes (45) are disposed in said transition area (46) distributed around the outline of said end surface (47).

7. A nozzle (40) according to any one of claims 4 to 6, wherein said nozzle holes (45) open to said rounded or curved surface.

8. A nozzle (40) according to any one of claims 1 to 7, wherein said nozzle holes (45) each have a nozzle axis (I,II,III,IV,V,VI), and wherein the nozzle axis (I,II,III,IV,V,VI) of each of said nozzle holes (45) is arranged at an obtuse angle α with said main direction and axis (X).

9. A nozzle (40) according to any one of claims 1 to 8, wherein the radial components of each of said nozzle axis (I,II,III,IV,V,VI) relative to said main direction and axis (X) are distributed over a circular sector with an arc less than 180 deg., preferably less than 120 deg. and even more preferable less than 110 deg.

10. A nozzle (40) according to any one of claims 1 to 9, wherein the radial components of each of said nozzle axis ((I,II,III,IV,V,VI) relative to said main direction and axis (X) are substantially evenly distributed over said circular section.

11. A large two-stroke compression ignited engine comprising:
a cylinder (1) with a combustion chamber (14) in said cylinder (1) between a reciprocating piston (21) and a cylinder cover (26),
a fuel valve (30) with a nozzle (40) according to any one of claims 1 to 10 connected to the fuel valve (40),
said fuel valve (30) being disposed in a cover bore in said cylinder cover (26), said cover bore opening to an inner surface (27) of said cylinder cover (26) facing said combustion chamber (14),
wherein said end surface (47) of said nozzle (40) is arranged substantially parallel with said inner surface (27) in the area where said cover bore opens to said inner surface (27).

12. An engine according to claim 11, wherein said distal end (44) is substantially flush with said inner surface (27) in the area where said cover bore opens to said inner surface (27).

13. An engine according to claim 11, wherein said distal end (44) only marginally protrudes from said inner surface (27) of said cylinder cover (26) into said combustion chamber (14).

14. An engine according to claim 12 or 13, wherein the opening of said cover bore to said inner surface (27) is undercut.

15. An engine according to any one of claims 12 to 14, wherein said inner surface (27) is provided with a cutout connected to the opening of said cover bore to said inner surface (27) for providing space for jets from said nozzle holes (45).

## Patentansprüche

1. Düse (40) für ein Kraftstoffventil (30) zum direkten Einspritzen von gasförmigem Kraftstoff in eine Brennkammer eines großen turbogeladenen Zweitakt-Verbrennungsmotors mit Kompressionszündung und Kreuzköpfen, wobei die Düse (40) Folgendes umfasst:
einen Düsenkörper, der sich in einer Hauptrichtung und Achse (X) von einer Basis (42) an einem proximalen Ende (41) des Düsenkörpers zu einem distalen Ende (44) des Düsenkörpers erstreckt, wobei die Basis (42) zur Befestigung an dem Kraftstoffventil (30) konfiguriert ist,
wobei der Düsenkörper einen im Wesentlichen zylindrischen Abschnitt (43) umfasst, der sich in Hauptrichtung und Achse (X) zwischen der Basis (42) und dem distalen Ende (44) erstreckt,
eine Einlassöffnung (48), die sich zu der Basis (42) öffnet, um Kraftstoff von dem Kraftstoffventil (30) aufzunehmen,
eine Vielzahl von Düsenlöchern (45), die in dem Düsenkörper am oder nahe dem distalen Ende (44) angeordnet sind, **dadurch gekennzeichnet, dass**
eine Hauptbohrung (50), die sich in der Hauptrichtung und Achse (X) von der Einlassöffnung (48) in den Düsenkörper zu den Düsenlöchern (45) erstreckt und dadurch die Düsenlöcher (45) fließend mit dem Einlass (48) verbindet und
dass das distale Ende (44) eine im Wesentlichen ebene Endfläche (47) umfasst, die zu der Hauptrichtung und Achse (X) schief angeordnet ist.

2. Düse (40) nach Anspruch 1, wobei die Endfläche (47) um die Hauptrichtung und Achse (X) zentriert ist.

3. Düse (40) nach Anspruch 1 oder 2, wobei die Endfläche (47) einen im Wesentlichen kreisförmigen oder elliptischen Umriss aufweist.

4. Düse (40) nach einem der Ansprüche 1 bis 3, umfassend einen Übergangsbereich (46) mit einer abgerundeten oder gekrümmten Außenfläche zwischen dem im Wesentlichen zylindrischen Abschnitt (43) und der Endfläche (47).

5. Düse (40) nach Anspruch 1, wobei die abgerundete oder gekrümmte Außenfläche die Außenfläche des zylindrischen Abschnitts (43) mit der Endfläche (47) verbindet.

6. Düse (40) nach Anspruch 4 oder 5, wobei die Düsenlöcher (45) in dem Übergangsbereich (46) angeordnet sind, der um den Umriss der Endfläche (47) herum verteilt ist.

7. Düse (40) nach einem der Ansprüche 4 bis 6, wobei die Düsenlöcher (45) zu der abgerundeten oder gekrümmten Fläche offen sind.

8. Düse (40) nach einem der Ansprüche 1 bis 7, wobei die Düsenlöcher (45) jeweils eine Düsenachse (I, II, III, IV, V, VI) aufweisen, und wobei die Düsenachse (I, II, III, IV, V, VI) jedes der Düsenlöcher (45) in einem stumpfen Winkel α zu der Hauptrichtung und Achse (X) angeordnet ist.

9. Düse (40) nach einem der Ansprüche 1 bis 8, wobei die radialen Komponenten jeder Düsenachse (I, II, III, IV, V, VI) in Bezug auf die Hauptrichtung und Achse (X) über einen Kreissektor mit einem Bogen von weniger als 180 Grad, vorzugsweise weniger als 120 Grad und vorzugsweise weniger als 110 Grad verteilt sind.

10. Düse (40) nach einem der Ansprüche 1 bis 9, wobei die radialen Komponenten jeder Düsenachse ((I,II,III,IV,V,VI) in Bezug auf die Hauptrichtung und Achse (X) im Wesentlichen gleichmäßig über den kreisförmigen Abschnitt verteilt sind.

11. Großer Zweitakt-Motor mit Kompressionszündung umfassend:
einen Zylinder (1) mit einer Brennkammer (14) in dem Zylinder (1) zwischen einem Hubkolben (21) und einem Zylinderdeckel (26),
ein Kraftstoffventil (30) mit einer Düse (40) nach einem der Ansprüche 1 bis 10, die mit dem Kraftstoffventil (40) verbunden ist,
wobei das Kraftstoffventil (30) in einer Deckelbohrung in dem Zylinderdeckel (26) angeordnet ist, wobei sich die Deckelbohrung zu einer der Brennkammer (14) zugewandten Innenfläche (27) des Zylinderdeckels (26) öffnet,
wobei die Endfläche (47) der Düse (40) im Wesentlichen parallel zur Innenfläche (27) in dem Bereich angeordnet ist, in dem sich die Deckelbohrung zur Innenfläche (27) öffnet.

12. Motor nach Anspruch 11, wobei das distale Ende (44) im Wesentlichen bündig mit der Innenfläche (27) in dem Bereich ist, in dem sich die Deckelbohrung zur Innenfläche (27) öffnet.

13. Motor nach Anspruch 11, wobei das distale Ende (44) nur geringfügig aus der Innenfläche (27) des Zylinderdeckels (26) in die Brennkammer (14) ragt.
S

14. Motor nach Anspruch 12 oder 13, wobei die Öffnung der Deckelbohrung zur Innenfläche (27) hinterschnitten ist.

15. Motor nach einem der Ansprüche 12 bis 14, wobei die Innenfläche (27) mit einem Ausschnitt versehen ist, der mit der Öffnung der Deckelbohrung zu der Innenfläche (27) verbunden ist, um Platz für Strahlen aus den Düsenlöchern (45) bereitzustellen.

## Revendications

1. Buse (40) pour soupape de carburant (30) pour l'injection directe de carburant gazeux dans une chambre de combustion d'un grand moteur à combustion interne à allumage par compression turbocompressé à deux temps avec des crosses, ladite buse (40) comprenant :
un corps de buse s'étendant dans une direction principale et sur un axe (X) à partir d'une base (42) à une extrémité proximale (41) dudit corps de buse jusqu'à une extrémité distale (44) dudit corps de buse, ladite base (42) étant configurée pour la fixation à ladite soupape de carburant (30),
ledit corps de buse comprenant une partie substantiellement cylindrique (43) s'étendant dans ladite direction principale et sur ledit axe (X) entre ladite base (42) et ladite extrémité distale (44),
un orifice d'entrée (48) débouchant sur ladite base (42) pour recevoir du carburant de ladite soupape de carburant (30),
une pluralité de trous de buse (45) disposés dans ledit corps de buse ou à proximité de ladite extrémité distale (44), **caractérisée en ce que**
un alésage principal (50) s'étendant dans ladite direction principale et sur ledit axe (X) à partir dudit orifice d'entrée (48) dans ledit corps de buse jusqu'auxdits trous de buse (45), reliant ainsi fluidiquement lesdits trous de buse (45) à ladite entrée (48), et
**en ce que** ladite extrémité distale (44) comprend une surface terminale (47) substantiellement planaire, disposée de façon oblique par rapport audit axe de direction principale (X).

2. Buse (40) selon la revendication 1, dans laquelle ladite surface terminale (47) est centrée autour de ladite direction principale et dudit axe (X).

3. Buse (40) selon la revendication 1 ou 2, dans laquelle ladite surface terminale (47) présente un contour substantiellement circulaire ou elliptique.

4. Buse (40) selon l'une quelconque des revendications 1 à 3, comprenant une zone de transition (46) avec une surface extérieure arrondie ou courbe entre ladite partie substantiellement cylindrique (43) et ladite surface terminale (47).

5. Buse (40) selon la revendication 1, dans laquelle ladite surface extérieure arrondie ou courbe relie la surface extérieure de ladite partie cylindrique (43) à ladite surface terminale (47).

6. Buse (40) selon la revendication 4 ou 5, dans laquelle lesdits trous de buse (45) sont disposés dans ladite zone de transition (46) et répartis autour du contour de ladite surface terminale (47).

7. Buse (40) selon l'une quelconque des revendications 4 à 6, dans laquelle lesdits trous de buse (45) débouchent sur ladite surface arrondie ou courbe.

8. Buse (40) selon l'une quelconque des revendications 1 à 7, dans laquelle lesdits trous de buse (45) présentent respectivement un axe de buse (I, II, III, IV, V, VI), et dans laquelle l'axe de buse (I, II, III, IV, V, VI) de chacun desdits trous de buse (45) est disposé selon un angle obtus α par rapport à la direction principale et audit axe (X).

9. Buse (40) selon l'une quelconque des revendications 1 à 8, dans laquelle les composantes radiales de chacun desdits axes de buse (I, II, III, IV, V, VI) par rapport à ladite direction principale et audit axe (X) sont réparties sur un secteur circulaire avec un arc inférieur à 180 degrés, de préférence inférieur à 120 degrés, et de façon plus préférentielle inférieur à 110 degrés.

10. Buse (40) selon l'une quelconque des revendications 1 à 9, dans laquelle les composantes radiales de chacun desdits axes de buse (I, II, III, IV, V, VI) par rapport à ladite direction principale et audit axe (X) sont réparties de façon substantiellement homogène sur ladite section circulaire.

11. Grand moteur à allumage par compression à deux temps, comprenant :
un cylindre (1) avec une chambre de combustion (14) dans ledit cylindre (1) entre un piston alternatif (21) et un couvercle de cylindre (26),
une soupape à carburant (30) avec une buse (40) selon l'une quelconque des revendications 1 à 10, reliée à la soupape à carburant (40),
ladite soupape à carburant (30) étant disposée dans un alésage de couvercle dans ledit couvercle de cylindre (26), ledit alésage de couvercle débouchant sur une surface intérieure (27) dudit couvercle de cylindre (26) tournée vers ladite chambre de combustion (14),
dans lequel ladite surface terminale (47) de ladite buse (40) est disposée substantiellement parallèlement à ladite surface intérieure (27) dans la zone où ledit alésage de couvercle débouche sur ladite surface intérieure (27).

12. Moteur selon la revendication 11, dans lequel ladite extrémité distale (44) est substantiellement alignée avec ladite surface intérieure (27) dans la zone où ledit alésage de couvercle débouche sur ladite surface intérieure (27).

13. Moteur selon la revendication 11, dans lequel ladite extrémité distale (44) fait saillie seulement légèrement dans ladite chambre de combustion (14) à partir de ladite surface intérieure (27) dudit couvercle de cylindre (26).

14. Moteur selon la revendication 12 ou 13, dans lequel l'ouverture dudit alésage de couvercle vers ladite surface intérieure (27) présente une contre-dépouille.

15. Moteur selon l'une quelconque des revendications 12 à 14, dans lequel ladite surface intérieure (27) est pourvue d'un découpage relié à l'ouverture dudit alésage de couvercle vers ladite surface intérieure (27) pour fournir de l'espace à des jets sortant desdits trous de buse (45).
